(19) Europäisches Patentamt / European Patent Office / Office européen des brevets

(11) **EP 3 170 874 B1**

(12) **EUROPEAN PATENT SPECIFICATION**

(45) Date of publication and mention
of the grant of the patent:
**10.04.2019   Bulletin 2019/15**

(51) Int Cl.:
**B32B 27/00** (2006.01)   **B32B 27/30** (2006.01)
**C09J 133/00** (2006.01)   **B32B 27/08** (2006.01)
**B32B 7/06** (2019.01)   **B32B 27/18** (2006.01)

(21) Application number: **15821547.5**

(22) Date of filing: **13.07.2015**

(86) International application number:
**PCT/JP2015/070088**

(87) International publication number:
**WO 2016/010013 (21.01.2016 Gazette 2016/03)**

(54) **POLYVINYLIDENE FLUORIDE RESIN ADHESIVE FILM**

HAFTFOLIE AUS POLYVINYLIDENFLUORIDHARZ

FILM ADHÉSIF EN RÉSINE DE POLY(FLUORURE DE VINYLIDÈNE)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **14.07.2014   JP 2014144530**

(43) Date of publication of application:
**24.05.2017   Bulletin 2017/21**

(73) Proprietor: **Denka Company Limited
Tokyo 103-8338 (JP)**

(72) Inventors:
• **HASUMI, Mizuki
Ichihara-city
Chiba 290-8588 (JP)**
• **KOMODA, Fukumu
Isesaki-city
Gunma 372-0855 (JP)**

(74) Representative: **Gulde & Partner
Patent- und Rechtsanwaltskanzlei mbB
Wallstraße 58/59
10179 Berlin (DE)**

(56) References cited:
JP-A- H0 230 528        JP-A- S5 863 774
JP-A- S5 863 774        JP-A- S5 863 774
JP-A- 2002 137 341      JP-A- 2002 137 341
JP-A- 2007 262 201      JP-A- 2008 144 047
JP-A- 2012 149 152      JP-A- 2014 091 775
JP-A- 2014 091 775      JP-U- H0 740 753
US-A1- 2011 045 638

## Description

Technical Field

The present invention relates to a polyvinylidene fluoride resin adhesive film that has a transparency-restoring action that is suited for surface repair and protection of various structures used indoors and outdoors.

Background Art

Polyvinyl chloride films, polymethacrylic ester films, fluorine-based film and the like have been used with various paints as surface protective films for interior and exterior parts. Because of their superior weather fastness, applications of these protective films are directed to many objects including wall papers, interior parts of elevators and vehicles, roofing materials, wall materials, rainwater gutters, garage roofings, sun rooms, agricultural materials, signboards, signs, and marks.

The protective films above were used separately in various applications according to their prices and properties. The base materials to be adhered are also diversified and examples thereof include widely plastic materials such as of polyvinyl chloride, polycarbonate, polymethyl methacrylate, acrylonitrile-butadiene-styrene copolymers, and FRPs, metals such as aluminum foil and steel plate, plywoods, glasses, and the like.

Fluorine-based resin films are generally used as the protective films above in the fields demanding high weather fastness and Patent Document 1 proposes a laminate film having a layer containing polyvinylidene fluoride as the principal component and a layer containing a polymethacrylic ester resin as the principal component.

Citation List

Patent Literature

[Patent Document 1] JP-A No. H08-267675 JP 2002-2137341 A discloses an adhesive film, comprising a resin base material layer 10, a resin surface layer 11 laminated on one face thereof and an acrylic adhesive layer formed on the other face thereof.

JP S58 63774 A discloses a polyvinylidene fluoride (PVDF) resin adhesive film, comprising in the order -layer A containing a PVDF resin (100 to 50 mass %) and a polymethacrylic ester resin (0 to 50 mass %) (100% in total); and -layer B containing a PVDF resin (0 to 50 mass %) and a polymethacrylic ester resin (100 to 50 mass %) (100% in total) and additionally an ultraviolet absorbent (0.1 to 15 mass % with respect to the resin components of layer B), and - an acrylic adhesive layer.

US 2011/045638 A1 discloses an acrylic adhesive has a storage modulus at 25°C and 1.0 Hz of $1.0 \times 10^{4}$ to $1.0 \times 10^{6}$ Pa, and a tan delta at 80°C and 1.0 Hz of 0.6 or less.

JP 2014 091775 A discloses an adhesive film comprising - an adhesive with a storage modulus at 25°C and 1.0 Hz of $1.0 \times 10^{4}$ to $1.0 \times 10^{6}$ Pa; and - a separator.

JPH07 40753 U discloses a pressure-sensitive adhesive film comprising in the order - a vinylidene fluoride film, - an acrylic resin film containing an ultraviolet absorber; - an acrylic adhesive sheet; and - a separator.

Summary of the Invention

Technical Problem

An object of the present invention is to provide a polyvinylidene fluoride resin adhesive film that is superior in stain resistance, weather fastness, and tackiness, suited for surface repair and protection of various structures used indoors and outdoors, particularly suited for repair of a surface-damaged transparent base material.

Solution to Problem

Specifically, the present invention relates to the followings:

(1) A polyvinylidene fluoride resin adhesive film, comprising a layer B, a layer A laminated on one face thereof and an acrylic adhesive layer formed on the other face thereof, wherein: the layer A is a resin composition containing a polyvinylidene fluoride resin in an amount of 85 to 55 mass % and a polymethacrylic ester resin in an amount of 15 to 45 mass % (100% in total); and the layer B is a resin composition containing a polyvinylidene fluoride resin in an amount of 15 to 45 mass % and a polymethacrylic ester resin in an amount of 85 to 55 mass % (100% in total) and additionally a triazine-based ultraviolet absorbent in an amount of 0.1 to 15 parts by mass with respect to the resin components of the layer B.

(2) The polyvinylidene fluoride resin adhesive film according to (1), wherein the layer A has a thickness of 5 pm to 100 pm and the layer B has a thickness of 5 pm to 100 pm.

(3) The polyvinylidene fluoride resin adhesive film according to any one of (1) or (2), wherein the acrylic adhesive layer has a thickness of 10 pm to 100 pm.

(4) The polyvinylidene fluoride resin adhesive film according to any one of (1) to (3), wherein the acrylic adhesive has a storage modulus G'in the shearing mode at 25°C and 1.0 Hz of 1.0x104 to 1.0x106 Pa as determined using a viscoelastometer, and a tan 8 at 100°C and 1.0 Hz of 0.6 or less determined using a viscoelastometer and obtained from the ratio (G"/G') of the storage modulus G' in the shearing mode at a frequency 1.0 Hz and at 100°C to the loss modulus G".

(5) The polyvinylidene fluoride resin adhesive film according to any one of (1) to (4), wherein the surface of the acrylic adhesive layer of the polyvinylidene fluoride resin adhesive film is protected with a separator.

(6) Use of a polyvinylidene fluoride resin adhesive film according to any one of (1) to (5) for repair of a transparent base material.

(7) Laminate comprising a transparent base material and a polyvinylidene fluoride resin adhesive film according to any one of (1) to (5) adhered thereto.

(8) A repair method, employing the polyvinylidene fluoride resin adhesive film according to any one of (1) to (5) for repair of a transparent base material.

Advantageous Effects of Invention

The polyvinylidene fluoride resin adhesive film according to the present invention is superior in adhesiveness and long-term weather fastness and also in stain resistance and solvent resistance and repellent to aqueous and oil inks and dusts if they may be attached thereto. As it is also superior in the efficiency of smoothing the surface irregularity of a damaged base material, it is favorable as a repair film and can be used favorably as a repair film for wall papers and interior parts such as of elevators and vehicles and also for exterior construction materials such as roofing materials, wall materials, and rainwater gutters, particularly transparent base materials for exterior use.

Description of Embodiments

Hereinafter, favorable embodiments of the present technology will be described. The embodiments described below are only some typical examples of the present technology and it should be understood that the scope of the technology is not restricted thereby at all.

The polyvinylidene fluoride resin for use in the present invention is a homopolymer of vinylidene fluoride or a copolymer of vinylidene fluoride with a vinylidene fluoride-copolymerizable monomer. Examples of the copolymerizable monomers that can be used include vinyl fluoride, tetrafluoroethylene, hexafluoropropylene, hexafluoroisobutylene, trifluorochloroethylene, various fluoroalkyl vinyl ethers, and the like and these monomers may be used alone or in combination of two or more.

Methacrylic ester resins include homopolymers of methyl methacrylate and copolymers of methyl methacrylate and other copolymerizable monomers. Examples of the copolymerizable monomers include methacrylic esters such as butyl methacrylate and ethyl methacrylate, acrylic esters and the like.

The blending ratio of the polyvinylidene fluoride resin to the polymethacrylic ester resin in layer A is 85 to 55/15 to 45 mass %. It is possible, when the blending ratio of the polyvinylidene fluoride resin is 50 mass % or more, to improve the properties of the polyvinylidene fluoride resin such as weather fastness and stain resistance.

The blending ratio of the polyvinylidene fluoride resin to the polymethacrylic ester resin in layer B is 15 to 45/85 to 55 mass %. It is possible, when the blending ratio of the polymethyl methacrylate is 50 mass % or more, to improve the adhesiveness to the adhesive layer.

The thicknesses of layer A, layer B, and the entire film are preferably, respectively 5 to 100 $\mu$m (layer A), 5 to 100 $\mu$m (layer B), and 10 to 200 $\mu$m (entire film). More preferably, the layer A has a thickness of 5 to 80 $\mu$m and the layer B 10 to 100 $\mu$m, and still more preferably, the layer A has a thickness of 10 to 60 $\mu$m and the layer B 13 to 80 $\mu$m. It is possible to improve the function as protective layer, when the layer A has a thickness of 5 $\mu$m or more, and to reduce the cost thereof, when it has a thickness of 100 $\mu$m or less. It is possible to improve the adhesiveness to the adhesive, when the layer B has a thickness of 5 $\mu$m or more, and to reduce the cost thereof, when it has a thickness of 100 $\mu$m or less.

An example of the method of improving further the weather fastness (in particular, in ultraviolet ray-blocking efficiency) of the base material in the state of transparent film is to add a triazine-based ultraviolet absorbent to the layer B in an amount of 0.1 to 15 mass % with respect to 100 parts of the resin components in layer B. In particular, a triazine-based ultraviolet absorbent is preferable from the viewpoint of ultraviolet ray-blocking efficiency. It is possible to improve the weather fastness further when the addition amount thereof is 0.1 mass % or more and it is possible, when the addition amount is 15 mass % or less, to prevent bleeding out of the ultraviolet absorbent on the film surface and also deterioration in the adhesiveness to acrylic adhesive and in adhesive physical properties such as adhesive strength and ball tack and additionally to reduce the cost.

Hereinafter, a method for producing the polyvinylidene fluoride resin film according to the present invention will be described. The film according to the present invention, which comprises two layers, is characterized in that at least one layer of them is bonded to the other integrally by melt extrusion molding. A common single- or twin-screw extruder is used for the melt extrusion molding. Methods of bonding multiple layers integrally include the following methods. T-die coextrusion molding methods of producing a multilayer by adhering resins in a molten state using multiple extrusion molding machines include a method of forming multiple resin layers in the sheet shape and combining and adhering them with each other (multimanifold die method) and a method of adhering multiple resins with each other and then expanding the mixture into a sheet shape (feedblock die method). It is also possible to produce a multilayered film by a method of using a circular die (inflation molding method).

Alternatively, it is also possible to employ a method of molding one of the multiple integrally bonded layers previously into a film shape and extrusion molding the other layers thereon and bonding them under pressure by heat or with an adhesive agent (generally, an adhesive agent is applied previously) repeatedly (extrusion lamination method). Although there is a method of producing both layers previously into a film shape and then integrating them using heat or an adhesive agent, the method is less advantageous in step and cost than the methods described above and it is technologically difficult to integrate the layers when the films are thin.

The thickness of the acrylic adhesive coated on layer B is preferably 10 to 100 $\mu$m, more preferably 20 to 60 $\mu$m. It is possible, when the thickness of the acrylic adhesive coated on layer B is 10 $\mu$m or more, to improve the followability to the surface irregularity of the adherend. In addition, it is possible, when the thickness of the acrylic adhesive coated on layer B is 100 $\mu$m or less, to prevent insufficient drying in the adhesive drying step and make the resulting product show its adhesive property sufficiently.

The acrylic adhesive preferably has a storage modulus at 25°C and 1.0 Hz of $1.0 \times 10^4$ to $1.0 \times 10^6$ Pa, and a tan $\delta$ at 100°C and 1.0 Hz of 0.6 or less. It more preferably has a storage modulus at 25°C and 1.0 Hz of $5.0 \times 10^4$ to $5.0 \times 10^5$ Pa and a tan $\delta$ at 100°C and 1.0 Hz of 0.4 or less. When the storage modulus is $1.0 \times 10^4$ Pa or more, the adhesive has an improved cohesive force and it is thus possible to prevent displacement or separation of the adhesive film from the adherend, after the adhesive film is bonded to the adherend. When the storage modulus is $1.0 \times 10^6$ Pa or less, the adhesive is favorably flexible and it is thus possible to improve the followability to the surface irregularity of the adherend. When the tan $\delta$ is 0.6 or less, the adhesive film shows improved heat resistance, it is possible to prevent displacement or separation of the adhesive film on the adherend, for example, by the heat of sunlight after the adhesive film is bonded to the adherend.

The storage modulus and the tan $\delta$ can be determined, for example, using a viscoelastometer manufactured by Rheometric Scientific. The storage modulus, as used in the present invention, is a storage modulus G' in the shearing mode at a frequency of 1.0 Hz and at 25°C, while the tan $\delta$ is a value obtained from the ratio (G"/G') of the storage modulus G' in the shearing mode at a frequency 1.0 Hz and at 100°C to the loss modulus G".

The haze of the acrylic adhesive, which is a value obtained by measuring the adhesive of 5 cm square having a thickness of 1.5 mm according to ASTM D1003 using a haze meter (type: NDH-1001DP, manufactured by Nippon Denshoku), is 0 to 30%, preferably 0 to 20%. When the haze of the acrylic adhesive is 30% or less, the adhesive film has a haze of 30% or less when it is coated on the vinylidene fluoride resin film, thus improving the transparency when it is bonded to a transparent base material.

A typical example of the acrylic adhesive used is a copolymer of at least one of C2 to C12 alkyl esters of acrylic acid such as ethyl acrylate, n-propyl acrylate, n-butyl acrylate, isobutyl acrylate, n-pentyl acrylate, 2-methylbutyl acrylate, n-hexyl acrylate, 2-ethylhexyl acrylate, n-octyl acrylate, isooctyl acrylate, n-nonyl acrylate, and isononyl acrylate (monomer A) and at least one functional group-containing acrylic monomer such as acrylic acid, methacrylic acid, acrylamide, N-methylolacrylamide, 2-hydroxyethyl acrylate, or 2-hydroxyethyl methacrylate (monomer B). The copolymerization ratio of the monomer A to the monomer B is in the range of 99.9/0.1 to 70/30 mass %, preferably in the range of 99/1 to 75/25 mass %.

A particularly favorable acrylic copolymer has a copolymerization ratio of butyl acrylate (BA) to acrylic acid (AA) in the range of 99.9/0.1 to 70/30 mass %, preferably in the range of 99.5/0.5 to 80/20 mass %. It becomes possible, when the content of AA is 0.1 mass % or more, to control the adhesion physical properties easily together with a crosslinking agent. When the content of AA is 30 mass % or less, the polymer has a lower glass transition point (Tg), thus becomes more adhesive to the adherend at low temperature and improved in processability.

The acrylic copolymer preferably has a weight-average molecular weight (Mw) of 200,000 to 1,000,000, more preferably 400,000 to 800,000 and the molecular weight can be regulated according to the amount of the polymerization initiator added and also by addition of a chain-transfer agent. When the weight-average molecular weight (Mw) is 200,000 or more, the acrylic copolymer has an improved cohesive force and thus, it is possible to prevent staining of the adhesive residue on the adherend and separation of the adhesive film. Alternatively when it is 1,000,000 or less, the acrylic copolymer is favorably flexible, leading to improvement of the followability of the adhesive film to the surface irregularity of the adherend.

The acrylic adhesive may contain, as needed, additives such as crosslinking agents, tackifiers, ultraviolet absorbents, and photostabilizers.

Examples of the crosslinking agents include isocyanate-based crosslinking agents, epoxy-based crosslinking agents, amine-based crosslinking agents, and the like. These crosslinking agents may be used alone or as two or more kinds of them are mixed. A particularly favorable crosslinking agent is an isocyanate-based crosslinking agent and such an isocyanate-based crosslinking agent is used in an amount of 0.3 to 4 parts by mass, preferably 0.5 to 3 parts by mass, with respect to 100 parts by mass of the acrylic adhesive. When the content of the isocyanate-based crosslinking agent is 0.3 part or more by mass, the acrylic adhesive has an improved cohesive force and it is possible to prevent staining of the adhesive residue on the adherend when the adhesive film is separated from the adherend and thus to improve the re-peeling efficiency. Alternatively when the content of the isocyanate-based crosslinking agent is 4 part or less by mass, the acrylic adhesive becomes favorably flexible and it is possible to improve the followability of the adhesive film to the surface irregularity of the adherend and to prevent incorporation of air bubbles when the adhesive film is bonded.

Typical examples of the isocyanate-based crosslinking agents include polyvalent isocyanate compounds such as 2,4-tolylene diisocyanate, 2,6-tolylene diisocyanate, 1,3-xylylene diisocyanate, 1,4-xylene diisocyanate, diphenylmethane-4,4'-diisocyanate, diphenylmethane-2,4'-diisocyanate, 3-methyldiphenylmethane diisocyanate, hexamethylene diisocyanate, isophorone diisocyanate, dicyclohexylmethane-4,4'-diisocyanate, dicyclohexylmethane-2,4'-diisocyanate, lysine isocyanate, and the like. These crosslinking agents may be used alone or as two or more kinds of them are mixed.

The tackifier can be selected, as its softening point and compatibility with other components are taken into consideration. Examples thereof include terpene resins, rosin resins, hydrogenated rosin resins, coumarone-indene resins, styrenic resins, aliphatic petroleum resins, alicyclic petroleum resins, terpene-phenol resins, xylene resins, other aliphatic and aromatic hydrocarbon resins, and the like. These resins may be used alone or as two or more kinds of them are mixed.

The ultraviolet absorbent can be selected, for example, as its ultraviolet ray-absorbing efficiency and compatibility to the acrylic adhesive used are taken into consideration. Examples thereof include hydroquinone-, benzotriazole-, benzophenone-, triazine- and cyanoacrylate-based absorbents, and the like. These absorbents may be used alone or as two or more kinds of them are mixed.

The photostabilizer can be selected, for example, as its compatibility to the acrylic adhesive used and thickness are taken into consideration. Examples thereof include hindered amine compounds, hindered phenol compounds, benzoate compounds, nickel complex salt compounds, and the like. These photostabilizers may be used alone or as two or more kinds of them are mixed.

The haze of the polyvinylidene fluoride resin adhesive film according to the present invention, which is a value obtained by using a polyvinylidene fluoride resin adhesive film of 5 cm square (resin layer thickness: 45 $\mu$m, acrylic adhesive layer thickness: 50 $\mu$m) as the test sample using a haze meter (type NDH-1001DP manufactured by Nippon Denshoku), is 0 to 30% and such an adhesive film does not impair the transparency of a transparent base material used outdoors for example of a plastic resin such as an acrylic or polycarbonate resin or glass, when it is applied thereon. Further, such an adhesive film is favorably followable to the surface irregularity of a damaged transparent base material and thus suppresses deterioration in transparency due to the damage on the transparent base material surface. Accordingly, it is thus favorable as an adhesive film for repair of transparent base materials. The haze is more preferably 0 to 20% and it is possible, when it is 30% or less, to improve the transparency of the adherend damaged transparent base material (plastic, glass).

The vinylidene fluoride resin adhesive film according to the present invention may have a separator layer formed on the surface of the acrylic adhesive layer.

A typical example of the separator used is a known common separator such as a PET film having a silicone-based release agent coated on the surface or a laminate film of paper and polyethylene having a silicone-based release agent coated on the polyethylene side.

The acrylic adhesive layer can be formed by a common method and is prepared, for example, by a method of coating and drying an adhesive directly on the layer B of the vinylidene fluoride resin film (direct coating method) or a method of applying an adhesive on a separator and, after drying, transferring the adhesive over the separator onto the layer B of the vinylidene fluoride resin film (transfer coating method).

A known common primer may be used, as needed, for improvement of the adhesiveness between the vinylidene fluoride resin film and the acrylic adhesive.

Examples

Hereinafter, the present invention will be described in detail with reference to Examples, but it should be understood that the present invention is not restricted by these Examples.

The polyvinylidene fluoride resin used was KYNAR 720 (product name, hereinafter, referred to as K-720) produced by Arkema. The polymethacrylic ester resin used was an acrylic rubber-containing polymethyl methacrylate resin, Hi-PET HBS (product name, hereinafter referred to as HBS) produced by Mitsubishi Rayon Co., Ltd. The ultraviolet absorbent used was a triazine- or benzotriazole-based compound. A mixture of K-720, HBS, and the ultraviolet absorbent, which is a blend thereof at the mass ratio shown in Table 1 or 2, was used after it was previously melted and pelletized in a 30 mm$\varphi$ counter-rotating twin-screw extruder. The acrylic adhesive used was a blend of a copolymer of butyl acrylate (BA) and acrylic acid (AA) (BA/AA=90/10, solid matter: 35%) in an amount of 100 parts by mass and an isocyanate-based crosslinking agent (solid matter: 45%) in an amount (parts by mass) shown in Table 1 or 2.

<Stain resistance>

The layer A side of the polyvinylidene fluoride resin adhesive film was painted with an oil-based ink (Magic ink, manufactured by Teranishi Chemical Industry Co,. Ltd.) in an area of 1 cm square and, after drying, the area was scrubbed with a piece of gauze 30 times and the state of the ink remaining thereon was evaluated by visual observation in the following manner:

◎: Ink completely removed
○: Ink removed, but only with scrubbing mark
Δ: Ink partially removed and partially unremoved (ink removed with scrubbing mark)
×: Mostly unremoved

<Substrate-protecting efficiency>

The polyvinylidene fluoride resin was bonded to a PVC sheet and subjected to the following tests, to give a change of yellowness index (Δb).
Weather resistance acceleration test of JIS A 1415
Testing methods for yellowness index and change of yellowness index of JIS K 7103

$$\text{Change of Yellowness index } (\triangle\text{b}) = \text{Post-exposure yellowness index / Initial}$$

$$\text{yellowness index}$$

<Adhesiveness to adhesive agent>

The acrylic adhesive layer of two polyvinylidene fluoride resin adhesive films were adhered to and separated from each other repeatedly, until one or both of the adhesive layers are peeled off from the polyvinylidene fluoride resin films.
The evaluation results are grouped into the followings:

◎: The adhesive layers remained intact even after the adhesive layers are adhered and separated repeatedly in the same region ten times.
○: The adhesive layers remained intact even after the adhesive layers are adhered and separated repeatedly in the same region five times.
Δ: The adhesive layers remained intact even after the adhesive layers are adhered and separated repeatedly in the same region three times.
×: One or both of the adhesive layers were peeled off after the adhesive layers are adhered and separated only once.

<Adhesive strength to SUS>

The adhesive strength (180-degree peel adhesion strength) was determined according to the "Testing methods of pressure-sensitive adhesive tapes and sheets" specified in JIS Z 0237.

<Adhesive strength to polycarbonate>

The adhesive strength (180-degree peel adhesion strength) was determined according to the "Testing methods of pressure-sensitive adhesive tapes and sheets" specified in JIS Z 0237.

<Ball tack >

The ball tack was determined according to the "Testing methods of pressure-sensitive adhesive tapes and sheets" specified in JIS Z 0237.

<Re-peeling efficiency>

The adhesive film was adhered to a SUS plate, heated at 60°C for 24 hours and cooled at room temperature for 2 hours. The adhesive film was then separated manually from the SUS plate. The adhesive remaining on the SUS plated was evaluated by visual observation.

○: Favorable (no remaining adhesive, demanding no cleaning before repeated adhesion)
✕: Unfavorable (remaining adhesive observed, demanding cleaning before repeated adhesion)

<Followability to surface irregularity>

An adhesive film of 5 cm square was adhered to a damaged uneven-surfaced 7-cm square polycarbonate plate (surface roughness (Ra): 10 $\mu$m according to JIS B 0601) and the presence of air bubbles incorporated therein was evaluated by visual observation in the following manner.

○: Favorable (no air bubble observed, as the film was followable to surface irregularity)
✕: Unfavorable (air bubbles observed, as the film was not favorably followable to surface irregularity)

[Example 1]

The ingredients in the blending composition shown in Table 1 were bilayer-coextrusion-molded, using two 40 mm$\varphi$ extruders and a multimanifold die having a width 300 mm and a slit of 0.5 mm, to give a laminated polyvinylidene fluoride resin film having layers A and B. The chill roll used closest to the die of the drawing apparatus was cooled with water. An acrylic adhesive prepared in the composition ratio shown in Table 1 was coated on a paper separator (SLB-50BD, produced by Sumika-Kakoushi) to have a thickness of 10 $\mu$m and, after drying, transferred onto the layer B of the polyvinylidene fluoride resin film, to give a polyvinylidene fluoride resin adhesive film. Results of the evaluation of various properties are summarized in Table 1.

[Examples 2 to 15]

A polyvinylidene fluoride resin adhesive film was prepared in a manner similar to Example 1, except that the resin blending ratio and others were changed to those shown in Table 1. Results of the evaluation of various properties are summarized in Table 1. It has to be noted that Example 9 is not part of the present invention.

[Comparative Examples 1 to 4]

A polyvinylidene fluoride resin adhesive film was prepared in a manner similar to Example 1, except that the resin blending ratio and others were changed to those shown in Table 2. Results of the evaluation of various properties are summarized in Table 2.

[Table 1]

| Item | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Resin blending ratio of layer A (K-720/HBS) | | 80/20 | 60/40 | 80/20 | 80/20 | 80/20 | 80/20 | 80/20 | 80/20 | 80/20 | 80/20 | 80/20 | 80/20 | 80/20 | 80/20 | 80/20 |
| Thickness of layer A ($\mu$m) | | 15 | 15 | 20 | 15 | 50 | 50 | 50 | 50 | 15 | 3 | 20 | 50 | 50 | 50 | 50 |
| Resin blending ratio of layer B (K-720/HBS) | | 20/80 | 40/60 | 20/80 | 20/80 | 20/80 | 20/80 | 20/80 | 20/80 | 20/80 | 20/80 | 20/80 | 20/80 | 20/80 | 20/80 | 20/80 |
| Thickness of layer B ($\mu$m) | | 30 | 30 | 20 | 30 | 50 | 50 | 50 | 100 | 30 | 20 | 3 | 50 | 50 | 50 | 50 |
| Ultraviolet absorbent in layer B | | 1.0 | 1.0 | 0.5 | 5.0 | 1.0 | 1.0 | 1.0 | 0.3 | 1.0 | 0.5 | 5.0 | 1.0 | 1.0 | 1.0 | 1.0 |
| Ultraviolet absorbent | | triazine-based | | | | | | | | benzotriazole-based | | triazine-based | | | | |
| Acrylic copolymer/ crosslinking agent ratio | | 100/1.5 | 100/1.5 | 100/1.5 | 100/1.5 | 100/1.5 | 100/2 | 100/1 | 100/1.5 | 100/1.5 | 100/1.5 | 100/1.5 | 100/1.5 | 100/1.5 | 100/5 | 100/0 |
| Thickness of acrylic adhesive layer ($\mu$m) | | 10 | 100 | 50 | 50 | 50 | 50 | 50 | 50 | 50 | 50 | 50 | 5 | 150 | 50 | 50 |
| Storage modulus G' of acrylic adhesive | | $7.7 \times 10^4$ | $7.7 \times 10^4$ | $7.7 \times 10^4$ | $7.7 \times 10^4$ | $7.7 \times 10^4$ | $5.6 \times 10^5$ | $2.3 \times 10^4$ | $7.7 \times 10^4$ | $7.7 \times 10^4$ | $7.7 \times 10^4$ | $7.7 \times 10^4$ | $10^4 \times$ | $7.7 \times 10^4$ | $1.5 \times 10^6$ | $8.8 \times 10^3$ |
| Storage modulus tan $\delta$ of acrylic adhesive | | 0.29 | 0.29 | 0.29 | 0.29 | 0.29 | 0.13 | 0.49 | 0.29 | 0.29 | 0.29 | 0.29 | 0.29 | 0.29 | 0.05 | 0.7 |
| Stain resistance | | ◎ | O | ◎ | ◎ | ◎ | ◎ | ◎ | ◎ | ◎ | △ | ◎ | ◎ | ◎ | ◎ | ◎ |
| Substrate-protecting efficiency ($\Delta$b) | 500 hr | 0.3 | 0.2 | 0.3 | 0.1 | 0.1 | 0.1 | 0.1 | 0.3 | 0.3 | 0.3 | 1.2 | 0.3 | 0.3 | 0.3 | 0.3 |
| | 1500 hr | 0.5 | 0.5 | 0.5 | 0.3 | 0.2 | 0.2 | 0.2 | 0.4 | 1.1 | 0.5 | 3.5 | 0.5 | 0.5 | 0.5 | 0.5 |

| Ultraviolet absorbent | triazine-based | | | | | | | | benzotriazole-based | triazine-based | | | | | |
|---|---|---|---|---|---|---|---|---|---|---|---|---|---|---|---|
| Adhesiveness to adhesive agent | ◎ | ◎ | ◎ | ◎ | ◎ | ◎ | ◎ | ◎ | ◎ | ◎ | Δ | ◎ | ◎ | ◎ | ◎ |
| Adhesive strength to SUS (N/10mm) | 3 | 12 | 8 | 8 | 8 | 6 | 9 | 12 | 8 | 8 | 8 | 1 | 22 | 3 | 10 |
| Adhesive strength to polycarbonate (N/10mm) | 4 | 14 | 11 | 11 | 11 | 9 | 12 | 14 | 11 | 11 | 11 | 1.8 | 23 | 4 | 12 |
| Ball tack (No.) | 2 | 13 | 7 | 7 | 7 | 4 | 10 | 7 | 7 | 7 | 7 | <1 | 24 | <1 | 10 |
| Re-peeling efficiency | ○ | ○ | ○ | ○ | ○ | ○ | ○ | ○ | ○ | ○ | ○ | ○ | Δ | ○ | Δ |
| Followability to surface irregularity | ○ | ○ | ○ | ○ | ○ | ○ | ○ | ○ | ○ | ○ | ○ | Δ | ○ | Δ | ○ |

[Table 2]

| Item | | Comparative Example 1 | Comparative Example 2 | Comparative Example 3 | Comparative Example 4 |
|---|---|---|---|---|---|
| Resin blending ratio of layer A (K-720/HBS) | | 40/60 | 20/80 | 80/20 | 80/20 |
| Thickness of layer A ($\mu$m) | | 15 | 15 | 15 | 50 |
| Resin blending ratio of layer B (K-720/HBS) | | 60/40 | 80/20 | 20/80 | 20/80 |
| Thickness of layer B ($\mu$m) | | 30 | 30 | 30 | 50 |
| Ultraviolet absorbent in layer B | | 1.0 | 1.0 | 20.0 | 0.0 |
| Ultraviolet absorbent | | triazine-based | | | None |
| Acrylic copolymer/crosslinking agent ratio | | 100/1.5 | 100/1.5 | 100/1.5 | 100/1.5 |
| Thickness of acrylic adhesive layer ($\mu$m) | | 50 | 50 | 50 | 50 |
| Storage modulus G' of acrylic adhesive | | $7.7 \times 10^4$ | $7.7 \times 10^4$ | $7.7 \times 10^4$ | $7.7 \times 10^4$ |
| Storage modulus tan $\delta$ of acrylic adhesive | | 0.29 | 0.29 | 0.29 | 0.29 |
| Stain resistance | | $\Delta$ | $\times$ | $\circledcirc$ | $\circledcirc$ |
| Substrate-protecting efficiency ($\triangle$b) | 500 hr | 0.2 | 0.4 | 0.3 | 3.6 |
| | 1500 hr | 0.5 | 0.9 | 0.5 | 7.3 |
| Adhesiveness to adhesive agent | | $\Delta$ | $\times$ | $\Delta$ | $\circledcirc$ |
| Adhesive strength to SUS (N/10mm) | | 8 | 8 | 1 | 8 |
| Adhesive strength to polycarbonate (N/10mm) | | 11 | 11 | 1.5 | 11 |
| Ball tack (No.) | | 7 | 7 | <1 | 7 |
| Re-peeling efficiency | | ○ | ○ | ○ | ○ |
| Followability to surface irregularity | | ○ | ○ | ○ | ○ |

As shown in Table 1, the polyvinylidene fluoride resin adhesive films of Examples 1 to 15 were mostly favorable in stain resistance, substrate-protecting efficiency (long-term weather fastness), adhesiveness to adhesive agent, re-peeling efficiency, and followability to surface irregularity.

On the other hand, as shown in Table 2, the polyvinylidene fluoride resin adhesive films of Comparative Examples 1 and 2, wherein the resin blending ratio of layer A to layer B is outside the range of the present invention, were found to be lower in stain resistance and adhesiveness to adhesive agent than those of Examples.

Alternatively, the polyvinylidene fluoride resin adhesive film of Comparative Example 3, wherein the content of the ultraviolet absorbent in layer B is more than 15 mass %, was found to be slightly lower in adhesiveness to adhesive agent and lower in adhesive strengths to SUS and polycarbonate and lead to separation over time after application.

Yet alternatively, the polyvinylidene fluoride resin adhesive film of Comparative Example 4, wherein the layer B does not contain any ultraviolet absorbent, was found to be very inferior in substrate-protecting efficiency (long-term weather fastness).

When the polyvinylidene fluoride resin adhesive films were compared between Examples, the polyvinylidene fluoride resin adhesive films of Examples, wherein the layer A has a thickness of 5 $\mu$m to 100 $\mu$m, were found to be superior in stain resistance to the polyvinylidene fluoride resin adhesive film of Example 10, wherein layer A has a thickness of less than 5 $\mu$m. The result shows that the thickness of the layer A is preferably designed to be 5 $\mu$m to 100 $\mu$m.

In addition, the polyvinylidene fluoride resin adhesive films of Examples, wherein the layer B has a thickness of 5 $\mu$m to 100 $\mu$m were found to be better in adhesiveness to adhesive agent and higher in substrate-protecting efficiency (long-term weather fastness) than the polyvinylidene fluoride resin adhesive film of Example 11, wherein the layer B has a thickness of less than 5 $\mu$m. The result shows that the thickness of the layer B is preferably designed to be 5 $\mu$m to 100 $\mu$m.

Further, the polyvinylidene fluoride resin adhesive films of Examples 1 to 11, 14, and 15, wherein the acrylic adhesive layer has a thickness of 10 $\mu$m to 100 $\mu$m, were found to be favorably superior in adhesive strength to SUS and adhesive strength to polycarbonate, lead to no separation over time after application, and is superior in followability to surface irregularity, as compared to the polyvinylidene fluoride resin adhesive film of Example 12, wherein the acrylic adhesive layer has a thickness of less than 10 $\mu$m. Further, the polyvinylidene fluoride resin adhesive film of Examples 1 to 11, 14, and 15, wherein the acrylic adhesive layer has a thickness of 10 $\mu$m to 100 $\mu$m, was found to be favorably superior in adhesive strengths to SUS and polycarbonate, lead to no separation over time after application, and have a ball tack of less than No. 15, show favorable tackiness, permit reliable operation during positioning and re-application of the film and has favorable re-peeling efficiency, as compared to the polyvinylidene fluoride resin adhesive films of Example 13, wherein the acrylic adhesive layer has a thickness of more than 100 $\mu$m. These results show that the thickness of the acrylic adhesive layer is preferably designed to be 10 $\mu$m to 100 $\mu$m.

In addition, the polyvinylidene fluoride resin adhesive film of Examples, wherein the acrylic adhesive has a storage modulus at 25°C and 1.0 Hz of $1.0 \times 10^4$ to $1.0 \times 10^6$ Pa were found to be superior in followability to surface irregularity to the polyvinylidene fluoride resin adhesive film of Example 14, wherein the acrylic adhesive has a storage modulus at 25°C and 1.0 Hz of more than $1.0 \times 10^6$ Pa. Further, the polyvinylidene fluoride resin adhesive film of Examples, wherein the acrylic adhesive has a storage modulus at 25°C and 1.0 Hz of $1.0 \times 10^4$ to $1.0 \times 10^6$ Pa and a tan $\delta$ at 100°C and 1.0 Hz of 0.6 or less, were found to be superior in re-peeling efficiency to the polyvinylidene fluoride resin adhesive film of Example 15, wherein the acrylic adhesive has a storage modulus at 25°C and 1.0 Hz of less than $1.0 \times 10^4$ Pa and a tan $\delta$ at 100°C and 1.0 Hz of more than 0.6. These results show that the acrylic adhesive preferably has a storage modulus at 25°C and 1.0 Hz of $1.0 \times 10^4$ to $1.0 \times 10^6$ Pa and a tan $\delta$ at 100°C and 1.0 Hz of 0.6 or less.

Industrial Applicability

It is expected, by using the adhesive film according to the present invention, that it is possible to restore the transparency of a damaged surface-irregular transparent base material for example of glass or a transparent plastic by smoothing the surface irregularity generated thereon and to contribute to improved surface protection, for example in weather fastness and stain resistance after application, of the transparent base material. Because the adhesive film according to the present invention can be used as a repair and protection adhesive film for transparent parts of constructions, the repair method employing the adhesive film according to the present invention is higher in usefulness.

**Claims**

1. A polyvinylidene fluoride resin adhesive film, comprising a layer B, a layer A laminated on one face thereof and an acrylic adhesive layer formed on the other face thereof, wherein:

   the layer A is a resin composition containing a polyvinylidene fluoride resin in an amount of 85 to 55 mass % and a polymethacrylic ester resin in an amount of 15 to 45 mass % (100% in total); and
   the layer B is a resin composition containing a polyvinylidene fluoride resin in an amount of 15 to 45 mass % and a polymethacrylic ester resin in an amount of 85 to 55 mass % (100% in total) and additionally a triazine-based ultraviolet absorbent in an amount of 0.1 to 15 parts by mass with respect to the resin components of the layer B.

2. The polyvinylidene fluoride resin adhesive film according to claim 1, wherein the layer A has a thickness of 5 $\mu$m to 100 $\mu$m and the layer B has a thickness of 5 $\mu$m to 100 $\mu$m.

3. The polyvinylidene fluoride resin adhesive film according to any one of claims 1 or 2, wherein the acrylic adhesive layer has a thickness of 10 $\mu$m to 100 $\mu$m.

4. The polyvinylidene fluoride resin adhesive film according to any one of claims 1 to 3, wherein the acrylic adhesive has a storage modulus G'in the shearing mode at 25°C and 1.0 Hz of $1.0 \times 10^4$ to $1.0 \times 10^6$ Pa as determined using a viscoelastometer, and a tan $\delta$ at 100°C and 1.0 Hz of 0.6 or less determined using a viscoelastometer and obtained from the ratio (G"/G') of the storage modulus G' in the shearing mode at a frequency 1.0 Hz and at 100°C to the loss modulus G".

**5.** The polyvinylidene fluoride resin adhesive film according to any one of claims 1 to 4, wherein the surface of the acrylic adhesive layer of the polyvinylidene fluoride resin adhesive film is protected with a separator.

**6.** Use of a polyvinylidene fluoride resin adhesive film according to any one of claims 1 to 5 for repair of a transparent base material.

**7.** Laminate comprising a transparent base material and a polyvinylidene fluoride resin adhesive film according to any one of claims 1 to 5 adhered thereto.

**8.** A repair method, employing the polyvinylidene fluoride resin adhesive film according to any one of claims 1 to 5 for repair of a transparent base material.

**Patentansprüche**

**1.** Haftfolie aus Polyvinylidenfluoridharz, umfassend eine Schicht B, eine auf eine Seite davon laminierte Schicht A und eine auf der anderen Seite davon ausgebildete Acrylklebstoffschicht, wobei:

die Schicht A eine Harzzusammensetzung ist, die ein Polyvinylidenfluoridharz in einer Menge von 85 bis 55 Masse-% und ein Polymethacrylsäureesterharz in einer Menge von 15 bis 45 Masse-% (insgesamt 100 %) enthält; und
die Schicht B eine Harzzusammensetzung ist, die ein Polyvinylidenfluoridharz in einer Menge von 15 bis 45 Masse-% und ein Polymethacrylsäureesterharz in einer Menge von 85 bis 55 Masse-% (insgesamt 100 %) und zusätzlich ein UV-Absorbens auf Triazinbasis in einer Menge von 0,1 bis 15 Masseteilen in Bezug auf die Harzkomponenten der Schicht B enthält.

**2.** Haftfolie aus Polyvinylidenfluoridharz nach Anspruch 1, wobei die Schicht A eine Dicke von 5 $\mu$m bis 100 $\mu$m aufweist und die Schicht B eine Dicke von 5 $\mu$m bis 100 $\mu$m aufweist.

**3.** Haftfolie aus Polyvinylidenfluoridharz nach einem der Ansprüche 1 oder 2, wobei die Acrylklebstoffschicht eine Dicke von 10 $\mu$m bis 100 $\mu$m aufweist.

**4.** Haftfolie aus Polyvinylidenfluoridharz nach einem der Ansprüche 1 bis 3, wobei die Acrylklebstoffschicht aufweist: einen Speichermodul G' im Schermodus bei 25 °C und 1,0 Hz von 1,0 · 10$^4$ bis 1,0 · 10$^6$ Pa, ermittelt unter Verwendung eines Viskoelastometers, und einen tan $\delta$ bei 100 °C und 1,0 Hz von 0,6 oder kleiner, ermittelt unter Verwendung eines Viskoelastometers und erhalten aus dem Verhältnis (G"/G') des Speichermoduls G' im Schermodus bei einer Frequenz von 1,0 Hz und bei 100 °C zu dem Verlustmodul G".

**5.** Haftfolie aus Polyvinylidenfluoridharz nach einem der Ansprüche 1 bis 4, wobei die Oberfläche der Acrylklebstoffschicht der Haftfolie aus Polyvinylidenfluoridharz mit einer Trennschicht geschützt ist.

**6.** Verwendung einer Haftfolie aus Polyvinylidenfluoridharz nach einem der Ansprüche 1 bis 5 zur Reparatur eines transparenten Basismaterials.

**7.** Laminat, umfassend ein transparentes Basismaterial und eine darauf geklebte Haftfolie aus Polyvinylidenfluoridharz nach einem der Ansprüche 1 bis 5.

**8.** Reparaturverfahren, unter Verwendung der Haftfolie aus Polyvinylidenfluoridharz nach einem der Ansprüche 1 bis 5 zur Reparatur eines transparenten Basismaterials.

**Revendications**

**1.** Film adhésif en résine de poly(fluorure de vinylidène), comprenant une couche B, une couche A laminée sur un côté de celle-ci et une couche adhésive acrylique formée sur l'autre côté de celle-ci :

la couche A étant une composition de résine contenant une résine de poly(fluorure de vinylidène) dans une teneur de 85 à 55 % massique et une résine ester polyméthacrylique dans une teneur de 15 à 45 % massique (100 % au total) ; et

la couche B étant une composition de résine contenant une résine de poly(fluorure de vinylidène) dans une teneur de 15 à 45 % massique et une résine ester polyméthacrylique dans une teneur de 85 à 55 % massique (100 % au total), et en outre un absorbant ultraviolet à base de triazine dans une teneur de 0,1 à 15 parties en masse par rapport aux composants de résine de la couche B.

2. Film adhésif en résine de poly(fluorure de vinylidène) selon la revendication 1, la couche A ayant une épaisseur de 5 $\mu$m à 100 $\mu$m et la couche B ayant une épaisseur de 5 $\mu$m à 100 $\mu$m.

3. Film adhésif en résine de poly(fluorure de vinylidène) selon l'une quelconque des revendications 1 ou 2, la couche adhésive acrylique ayant une épaisseur de 10 $\mu$m à 100 $\mu$m.

4. Film adhésif en résine de poly(fluorure de vinylidène) selon l'une quelconque des revendications 1 à 3, l'adhésif acrylique ayant un module de stockage G' dans le mode de cisaillement à 25 °C et 1,0 Hz de $1,0 \times 10^4$ à $1,0 \times 10^6$ Pa, tel que déterminé en utilisant un viscoélastomètre, et une tan $\delta$ à 100 °C et 1,0 Hz de 0,6 ou moins, déterminée en utilisant un viscoélastomètre et obtenue à partir du rapport (G"/G') entre le module de stockage G' dans le mode de cisaillement à une fréquence de 1,0 Hz et à 100 °C et le module de perte G".

5. Film adhésif en résine de poly(fluorure de vinylidène) selon l'une quelconque des revendications 1 à 4, la surface de la couche adhésive acrylique du film adhésif en résine de poly(fluorure de vinylidène) étant protégée par un séparateur.

6. Utilisation du film adhésif en résine de poly(fluorure de vinylidène) selon l'une quelconque des revendications 1 à 5 pour la réparation d'un matériau de base transparent.

7. Stratifié comprenant un matériau de base transparent et un film adhésif en résine de poly(fluorure de vinylidène) selon l'une quelconque des revendications 1 à 5 y étant attaché.

8. Procédé de réparation utilisant le film adhésif en résine de poly(fluorure de vinylidène) selon l'une quelconque des revendications 1 à 5 pour la réparation d'un matériau de base transparent.

**EP 3 170 874 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08267675 A
- JP 20022137341 A
- JP S5863774 A
- US 2011045638 A1
- JP 2014091775 A
- JP H0740753 U